# EUROPÄISCHE PATENTSCHRIFT

(11) **EP 3 857 087 B1**
(45) Veröffentlichungstag und Bekanntmachung des Hinweises auf die Patenterteilung: **26.10.2022**
(21) Anmeldenummer: 19783412.0
(22) Anmeldetag: 26.08.2019
(51) Int. Cl.: F16C 41/00, F16C 17/24, G01M 13/04, G01L 5/00, F16C 17/02

(54) **GLEITLAGERANORDNUNG**
SLIDING BEARING ASSEMBLY
ENSEMBLE FORMANT PALIER LISSE

(30) Priorität: 29.08.2018 AT 507412018
(43) Veröffentlichungstag der Anmeldung: 04.08.2021
(73) Patentinhaber: Miba Gleitlager Austria GmbH, 4663 Laakirchen (AT)
(72) Erfinder: HAGER, Gunther, 4563 Micheldorf (AT); HAMDARD, Kamal, 4810 Gmunden (AT); SCHALLMEINER, Stefan, 4661 Roitham (AT)
(74) Vertreter: Burger, Hannes
(86) Internationale Anmeldenummer: PCT/AT2019/060272
(87) Internationale Veröffentlichungsnummer: WO 2020/041809

(56) Entgegenhaltungen:
- EP-A1- 3 211 202
- EP-A2- 1 022 702
- DE-A1-102007 052 426
- DE-A1-102013 225 330
- JP-A- 2009 254 163

## Beschreibung

Die Erfindung betrifft eine Gleitlageranordnung umfassend zumindest ein Gleitlagerelement, das in einer Lageraufnahme angeordnet ist, wobei die Lageraufnahme Teil einer Lagerstruktur ist, und wobei die Lagerstruktur zumindest einen Sensor aufweist, der mit einer Datenübertragungseinrichtung zur, insbesondere drahtlosen, Datenübertragung an einen Empfänger der Daten verbunden ist, und mit einer Energieerzeugungseinrichtung zur autarken Versorgung des Sensors und/oder der Datenübertragungseinrichtung mit elektrischer Energie, wobei die Energieerzeugungseinrichtung zumindest ein Piezoelement aufweist, und die Energieerzeugungseinrichtung der Sensor ist.

Weiter betrifft die Erfindung ein Verfahren zur Überwachung eines Gleitlagerelementes in einer Gleitlageraufnahme einer Gleitlageranordnung mit zumindest einem Sensor, wobei mit dem Sensor ein Messwert erfasst wird und dieser Messwert an eine Datenübertragungseinrichtung zur, insbesondere drahtlosen, Datenübertragung an einen Empfänger der Daten weitergeleitet wird, und wobei die elektrische Energie für den Sensor und/oder die Datenübertragungseinrichtung durch die Bewegung des Gleitlagerelementes oder der Gleitlageranordnung erzeugt wird, und für die Erzeugung der elektrischen Energie zumindest ein Piezoelement verwendet wird, wobei das Piezoelement als Sensor ausgeführt wird, sodass die Erzeugung der elektrischen Energie mit dem Sensor erfolgt.

In den letzten Jahren erlangte die sensorische Überwachung von Gleitlagern eine immer größere Bedeutung. Neben der indirekten Messung von Gleitlagerparametern, beispielsweise aufgrund der Temperaturerhöhung der Lageraufnahme, steht zunehmend auch die Anordnung von Sensoren im oder in unmittelbarer Nähe zum Schmierspalt im Vordergrund der Entwicklung. Problematisch sind dabei nicht nur die Umweltbedingungen für die Sensorik, sondern auch die Gleitlagern eigenen mechanischen Ausprägungen, wie beispielsweise das Vorhandensein von rotierenden Bauteilen. Beispielhaft sei auf die AT 408 900 B verwiesen, aus der eine Vorrichtung zum Überwachen eines Gleitlagers, das eine in einem Stützkörper eingespannte Lagerschale aufweist, bekannt ist, mit wenigstens einem im Lagerschalenbereich angeordneten Messfühler für temperaturabhängige Messsignale und mit einer Auswerteschaltung für die Messsignale. Der Messfühler ist als Druckfühler für in Umfangsrichtung der Lagerschale wirksame Druckkräfte oder für radiale Druckkräfte zwischen Lagerschale und Stützkörper ausgebildet.

In diesem Zusammenhang stellt sich die Frage der Energieversorgung der Sensoren. Aus dem Stand der Technik ist bereits bekannt, dass die Energiegewinnung direkt im Gleitlager erfolgen soll. So beschreibt z.B. die US 2016/0208849 A1 ein Gleitlager und ein Verfahren zu seiner Herstellung. Das Gleitlager kann ein metallisches Substrat, eine elektrisch isolierende Schicht auf dem metallischen Substrat und eine elektrische Komponente auf der elektrisch isolierenden Schicht umfassen. Das Gleitlager kann operativ mit einem Überwachungsmodul verbunden sein, das konfiguriert ist, um die elektrische Komponente zu überwachen. Die Lagerschale kann Mikrogeneratoren zum lokalen Erzeugen von Energie aus mechanischer Energie aufweisen, z.B. aus mechanischen Schwingungen in der Lagerschale.

Auch aus der EP 2 963 409 A1 ist ein System umfassend eine Mehrzahl von im Wesentlichen identischen Komponenten in Form von selbstschmierenden Rotorneigungssteuerlager eines Hubschraubers bekannt, die unter im Wesentlichen identischen Bedingungen arbeiten, wobei jede der Komponenten mit mindestens einem Sensor zum Messen desselben Betriebsparameters der Komponenten zu einer gegebenen Zeit ausgestattet ist. Weiter umfasst das System einer Überwachungseinheit, die konfiguriert ist, um die Signale der Sensoren zu empfangen und zu verarbeiten und Wartungsdaten basierend auf den Sensorsignalen zu erzeugen. Die Komponenten können mit Energiegewinnungsmitteln zur Erzeugung von Energie aus der Bewegungen einer Komponente relativ zu anderen Komponenten versehen sein. Es wird damit ein kontinuierlicher und autonomer Betrieb der Sensoren ermöglicht.

Die WO 2013/160053 A1 beschreibt Verfahren zum Überwachen eines Wälzlagers, umfassend den Schritt Erhalten von Daten bezüglich eines oder mehrerer der Faktoren, die die Restlebensdauer des Lagers beeinflussen, unter Verwendung von mindestens einem Sensor, Erhalten von Identifikationsdaten, die das Lager eindeutig identifizieren, Übertragen von Daten zu und/oder von dem mindestens einen Sensor unter Verwendung eines industriellen drahtlosen Protokolls und Aufzeichnen der Daten bezüglich eines oder mehrerer von die Faktoren, die die Restlebensdauer des Lagers und die Identifikationsdaten als aufgezeichnete Daten in einer Datenbank beeinflussen, wobei mindestens ein Sensor konfiguriert ist durch Elektrizität angetrieben zu werden, die durch die Bewegung eines Lagers oder des Lagers erzeugt wird, wenn es in Gebrauch ist.

Aus der DE 10 2007 052 426 A1 ist eine Vorrichtung zur Übertragung von Daten in einem Lager, insbesondere in einem Wälz- oder Gleitlager, an eine außen an dem Lager oder außerhalb des Lagers angeordnete Empfangsvorrichtung bekannt, wobei die Vorrichtung umfasst: einen im Inneren des Lagers angeordneten Signalwandler, der Signale erfasst und diese in Schall umwandelt, und ein Lagerbestandteil des Lagers, insbesondere einen Lagerring des Lagers, wobei in dem Korpus des Lagerbestandteils der Schall als Körperschall übertragen wird. DE 10 2007 052426 A1 offenbart die Merkmale des Oberbegriffs der Ansprüche 1 und 5.

Die DE 10 2013 225 330 A1 offenbart ein Wälzlager oder Gleitlager mit einem Außenring und einem Innenring, zwischen denen optional mehrere Wälzkörper angeordnet sind, wobei an und/oder in dem Innenring und/oder an und/oder in dem Außenring und/oder an mindestens einem der optionalen Wälzkörper mindestens eine aktive Schwingungsdämpfereinheit, insbesondere ein Piezoelement, angeordnet ist.

Die JP 2009-254163 A beschreibt Möglichkeiten zur Versorgung eines vorbestimmten Geräts innerhalb eines Verbrennungsmotors ohne externen Anschluss mit Strom. Eine Stromerzeugungsvorrichtung hat einen Drehstromgenerator, der in einer Pleuelstange der Brennkraftmaschine vorgesehen ist, und einen exzentrischen Rotor zum Aufbringen einer Drehkraft auf den Drehstromgenerator. Der exzentrische Rotor wirkt auf den Drehkraftgenerator und bewirkt, dass dieser durch eine Bewegung der Pleuelstange Kraft erzeugt. Ein Detektor umfasst einen Temperaturmesssensor und einen Sender und ist an einer Position auf der Seite eines kleinen Endes der Verbindungsstange vorgesehen. Die Energieerzeugungsvorrichtung liefert Energie und ist an einer Position an der Seite eines großen Endes vorgesehen. Nach einer Ausführungsvariante kann die Energieerzeugungsvorrichtung auch ein Stapel von Piezoelementen sein.

Aus der EP 1 022 702 A2 ist ein drahtloser Wandler mit Eigenantrieb zum Überwachen äußerer physikalischer Bedingungen, wie etwa übermäßiger Vibrationen in einem Lager, bekannt. Der Wandler enthält eine Energieumwandlungsquelle, wie beispielsweise einen piezoelektrischen Sensor, um den äußeren physikalischen Zustand zu erfassen und ein charakteristisches Signal zu erzeugen, das zur Versorgung einer HF-Sendeschaltung verwendet wird. Ein Sender ist vorgesehen, um Signale zu senden, die den äußeren physischen Zustand oder Änderungen dieses Zustands anzeigen, wie beispielsweise erhöhte Vibrationen in einem Lager, um Lagerfehler vor einem Ausfall zu erfassen. Der autarke drahtlose Wandler enthält eine Spannungsspeichervorrichtung zum Empfangen einer elektrischen Spannung von dem piezoelektrischen Sensor und einen Spannungsdetektor zum Erfassen des Spannungspegels an der Spannungsspeichervorrichtung. Sobald der Spannungsdetektor einen Spannungspegel auf einem vorbestimmten Pegel erfasst, wird eine oszillierende Sendeschaltung für eine kurze Hystereseperiode des Spannungsdetektors aktiviert.

Aus der EP 3 211 202 A1 ist ein Motorsteuersystem für eine Brennkraftmaschine bekannt, das zumindest ein Energieerntemodul mit zumindest einem Energieumwandler und zumindest einem Energiemodul, zumindest einen Sensor zum Erfassen einer physikalischen oder chemischen Messgröße der Brennkraftmaschine, einen Mikrocontroller zum Verarbeiten der erfassten Messgröße und ein Funkmodul zur drahtlosen Übertragung der von dem Mikrocontroller verarbeiteten Messgröße an einen Funkempfänger aufweist, wobei der Mikrocontroller mit dem Sensor und dem Funkmodul kommunizierend verbunden ist und wobei das Energiemodul zur Übertragung von elektrischer Energie zumindest mit dem Mikrocontroller und dem Funkmodul verbunden ist. Weiter weist das System ein Motorsteuergerät auf, das mit dem Funkempfänger kommunizierend verbunden und derart ausgebildet ist, dass es vom Funkempfänger eingehende Messgrößen auswertet, zu Steuersignalen verarbeitet und diese an die Brennkraftmaschine überträgt.

Der vorliegenden Erfindung liegt die Aufgabe zugrunde die Energieversorgung eines Sensors in einer Gleitlageranordnung zu verbessern.

Die Aufgabe wird bei der eingangs genannten Gleitlageranordnung dadurch gelöst, dass das Piezoelement mit dem Schmiermitteldruck im Schmierspalt zwischen dem Gleitlagerelement und einer Welle oder der Lageraufnahme beaufschlagbar ist, wofür der Sensor im Schmierspalt der Gleitlageranordnung als Teil einer Gleitschicht des Gleitlagerelementes angeordnet ist oder mit dem Schmierspalt hydrostatisch verbunden ist.

Weiter wird die Aufgabe der Erfindung mit dem eingangs genannten Verfahren gelöst, wonach vorgesehen ist, dass der Sensor im Schmierspalt der Gleitlageranordnung als Teil einer Gleitschicht des Gleitlagerelementes angeordnet wird oder mit dem Schmierspalt hydrostatisch verbunden wird und mit dem Sensor der Druck im Schmierspalt gemessen wird.

Von Vorteil ist dabei, dass mit der Energieerzeugung durch den Sensor selbst zusätzlich zur verbesserten Energieerzeugung Bauraum eingespart werden kann.

Es ist vorgesehen, dass das Piezoelement mit dem Schmiermitteldruck im Schmierspalt des Gleitlagerelementes beaufschlagbar ist. Dafür ist der Sensor im Schmierspalt des Gleitlagers angeordnet oder mit dem Schmierspalt hydrostatisch verbunden. Mit dem Sensor wird der Druck im Schmierspalt gemessen, wobei durch den Einfluss des Druckes auf den Sensor elektrische Energie erzeugt wird. Im Schmierspalt einer Gleitlagerung herrschen mitunter hohe Drücke vor. Durch die Beaufschlagung des Piezoelementes mit dem Schmiermitteldruck im Schmierspalt kann nicht nur der Druck an sich gemessen werden, sondern ist durch die Verwendung eines Piezoelementes auch eine einfache Möglichkeit gegeben, den Druck gegebenenfalls zur Erzeugung von elektrischer Energie für die Versorgung des Sensors heranzuziehen.

Vorzugsweise kann gemäß einer Ausführungsvariante der Erfindung vorgesehen sein, dass das Piezoelement mit einer seismischen Masse verbunden ist. Zusätzlich zu den voranstehend genannten Effekten kann damit ein einfacherer Einbau erreicht werden, da das Piezoelement mit einem Bauteil der Gleitlageranordnung (direkt) verbunden werden kann. Zudem kann über die seismische Masse auch auf die auf das Piezomaterial wirkende Kraft und damit auf das Ausmaß der Ladungsverschiebung Einfluss genommen werden.

Von Vorteil ist, wenn das Piezoelement auf Druck vorgespannt ist, da durch die Druckvorspannung des Piezoelementes dieses besser in die Gleitlageranordnung integrierbar ist, da damit dessen Belastbarkeit verbessert werden kann. Zudem kann damit erreicht werden, dass die Quantität der erzeugten elektrischen Energie vergrößert werden kann, da sich das Piezoelement bei dessen Beschleunigung entgegen der Vorspannung ausdehnt, wodurch der gesamte zur Verfügung stehende Betriebsbereich des Piezoelementes besser ausgenutzt werden kann. Es kann damit bei gleichem Energieverbrauch ein kleineres Piezoelement eingesetzt werden. Dies ist wiederum in Hinblick auf den beschränkten Bauraum in Gleitlageranordnungen von Vorteil.

Die Lagerstruktur kann nach einer anderen Ausführungsvariante der Erfindung eine Pleuelstange mit einem Pleuelschaft sein, wobei die Datenübertragungseinrichtung am oder zumindest teilweise im Pleuelschaft angeordnet ist, sodass also die Pleuelaugen hiervon unberührt für die Anordnung des Sensors, insbesondere des energieerzeugenden Sensors, zur Verfügung stehen, und damit die Position des Sensors in Hinblick auf die Energieerzeugung relativ frei gewählt werden kann.

Zum besseren Verständnis der Erfindung wird diese anhand der nachfolgenden Figuren näher erläutert.

Es zeigen jeweils in stark vereinfachter, schematischer Darstellung:
- Fig. 1: einen Ausschnitt aus einer Gleitlageranordnung;
- Fig. 2: ein Detail einer Gleitlageranordnung;
- Fig. 3: ein Detail einer anderen Ausführungsvariante der Gleitlageranordnung;
- Fig. 4: einen Ausschnitt aus einer Ausführungsvariante der Gleitlageranordnung;
- Fig. 5: eine weitere Ausführungsvariante einer Gleitlageranordnung;
- Fig. 6: eine Ausführungsvariante eines Lagerdeckels.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

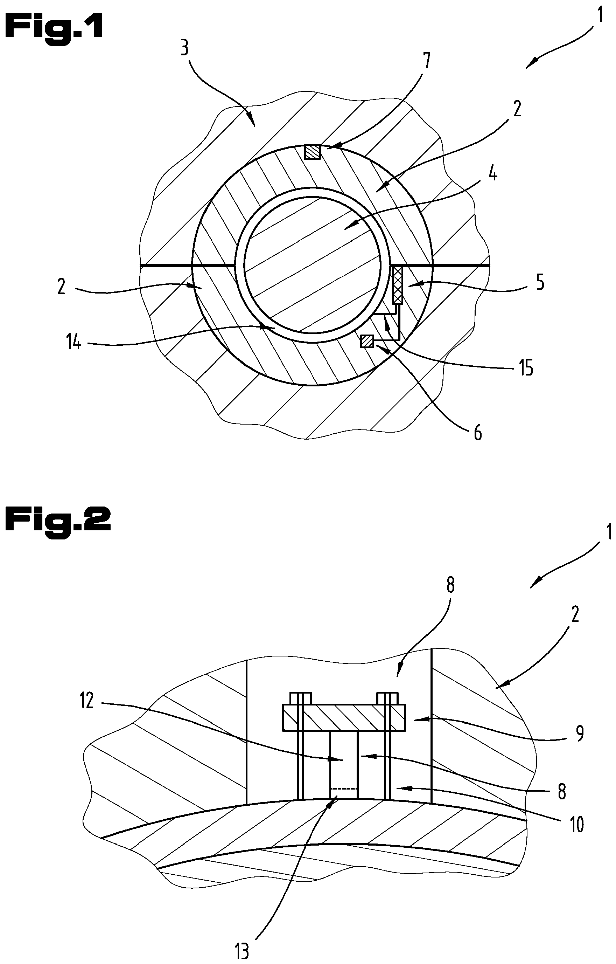

In Fig. 1 ist ein Ausschnitt aus einer Gleitlageranordnung 1 dargestellt.

Die Gleitlageranordnung umfasst zumindest ein Gleitlagerelement 2. Im dargestellten Ausführungsbeispiel sind zwei Gleitlagerelemente 2 dargestellt, die die Form von sogenannten Halbschalen haben. Es besteht jedoch auch die Möglichkeit, dass das Gleitlagerelement 2 als Gleitlagerbuchse ausgebildet ist. Zudem kann das mit den Gleitlagerelementen 2 ausgestattete Gleitlager eine andere Teilung aufweisen, sodass also beispielsweise drei oder vier oder mehr als vier Gleitlagerelemente 2 in dem Gleitlager verbaut sein können. In sehr großen Gleitlagern, wie sie beispielsweise in Windenergieanlagen eingesetzt werden, können die Gleitlagerelemente 2 beispielsweise auch als Gleitlagerpads ausgebildet sein, wobei in diesen Fällen deutlich mehr als vier Gleitlagerelemente 2, beispielsweise bis zu 40 Gleitlagerelemente 2, im Gleitlager vorhanden sein können.

Das zumindest eine Gleitlagerelement 2 ist in einer Lageraufnahme 3 angeordnet, beispielsweise mittels einer Presspassung.

Es besteht jedoch auch die Möglichkeit, dass die Lageraufnahme 3 direkt beschichtet ist, sodass die Lageraufnahme 3 auch die Gleitfläche für ein in der Gleitlageranordnung 1 gelagertes Bauteil, beispielsweise eine Welle 4, bildet. In diesem Fall sind das Gleitlagerelement 2 und die Lageraufnahme 3 einstückig miteinander ausgebildet, sodass das das Gleitlagerelement 2 einen integralen Bestandteil der Lageraufnahme 3 bildet.

Bei diesen Ausführungsvarianten der Gleitlageranordnung 1 bildet die Gegenlauffläche des Gleitlagers die Oberfläche der Welle. Es besteht jedoch auch die umgekehrte Möglichkeit der Anordnung des zumindest einen Gleitlagerelementes 2, nämlich die drehfeste Verbindung mit der Welle 4. In diesem Fall wird die Gegenlauffläche durch die Oberfläche der Lageraufnahme 3 gebildet, in der das Gleitlager im zusammengebauten Zustand der Gleitlageranordnung 1 zwar aufgenommen aber nicht drehtfest damit verbunden ist.

Das zumindest eine Gleitlagerelement 2 und die Lageraunahme 3 sind Teil eine Lagerstruktur, die neben diesen beiden Bestandteilen auch noch zumindest einen Sensor 5 umfasst. Selbstverständlich können auch mehr als ein Sensor 5 in der Gleitlageranordnung 1 angeordnet sein.

Der Sensor 5 ist ein Drucksensor. Mithilfe des zumindest einen Sensors 5 können Parameter der Gleitlageranordnung 1 im Betrieb erfasst werden. Anhand dieser Parameter kann z.B. auf den Zustand des zumindest einen Gleitlagerelementes 2 rückgeschlossen werden. Es können also mit dem Sensor 5 für den Betrieb der Gleitlageranordnung 1 wesentliche Parameter erfasst werden.

Bevorzugt erfolgt die Verarbeitung der erfassen Parameter, d.h. der zugehörigen Daten, nicht in der Gleitlageranordnung 1 selbst, sondern in einem Datenverarbeitungselement, das beabstandet zu dem zumindest einem Gleitlagerelement 2 angeordnet ist. Für die Datenübertragung zu diesem zumindest einem Datenverarbeitungselement kann die Gleitlageranordnung 1 eine Datenübertragungseinrichtung 6 aufweisen, die die Daten von dem zumindest einen Sensor 5 empfängt und an das zumindest eine Datenverarbeitungselement als Datenempfänger weiterleitet, insbesondere drahtlos. Für die drahtlose Datenübertragung können die bekannten Protokolle verwendet werden. Die drahtlose Datenübertragung kann beispielsweise mittel Bluetooth oder WLAN, etc., erfolgen.

Da derartige Systeme der Datenerfassung in Gleitlagerelementen und der drahtlosen Übertragung an eine dazu externe Stelle an sich bereits aus dem für Gleitlager einschlägigen Stand der Technik bekannt sind, sei zur Vermeidung von Wiederholungen zu weiteren Einzelheiten dazu auf diesen Stand der Technik verwiesen.

Die Gleitlageranordnung 1 weist weiter eine Energieerzeugungseinrichtung 7 auf. Mithilfe dieser Energieerzeugungseinrichtung 7 ist es möglich, den zumindest einen Sensor 5 und/oder die Datenübertragungseinrichtung 6 autark mit elektrischer Energie zu versorgen, sodass also hierfür keine kabelgebundenen Anschlüsse der Gleitlageranordnung 1 nach außen erforderlich sind.

Die zumindest eine Energieerzeugungseinrichtung 7 (es können auch mehr als eine Energieerzeugungseinrichtung 7 in der Gleitlageranordnung 1 angeordnet sein) ist im dargestellten, hinsichtlich der dargestellten Energieerzeugungseinrichtung 7 nicht vom Schutzbereich umfassten Ausführungsbeispiel der Gleitlageranordnung 1 im bzw. auf dem zumindest einen Gleitlagerelement 2 angeordnet, beispielsweise in einer Ausnehmung 8 im Gleitlagerelement 2, wie dies aus Fig. 2 ersichtlich ist, die ein Detail der Gleitlageranordnung nach Fig. 1 zeigt. Es sei jedoch darauf hingewiesen, dass diese konkret dargestellte Anordnung der Energieerzeugungseinrichtung 7 ebenso wie die konkret dargestellte Anordnung des Sensors 5 in einer Bohrung des Gleitlagerelementes 2 bzw. die konkret dargestellte Anordnung der Datenübertragungseinrichtung 6 lediglich der Erläuterung der Erfindung dienen. Konstruktiv ist die Anordnung dieser Elemente auch anders gelöst.

Die Energieerzeugungseinrichtung 7 weist zumindest ein Piezoelement 8 auf, das in Fig. 2 dargestellt ist. Je nach benötigter Energiemenge kann auch mehr als ein Piezoelement 8 in der Gleitlageranordnung 1 zur Erzeugung von elektrischer Energie angeordnet sein, beispielsweise in Form eines Piezoelementpaketes.

Das zumindest eine Piezoelement 8 kann als Multilayer-Stapel, d.h. ein mehrlagiges Piezoelement 8 mit mehreren übereinander angeordneten piezoelektrischen Elementen, ausgeführt sein.

Das Piezoelement 8 kann eine beliebige Querschnittsform aufweisen, beispielsweise eine kreisrunde oder eine viereckige, wie z.B. eine quadratische.

Dieses Piezoelement 8 kann auf Druck vorgespannt in der Gleitlageranordnung 1 angeordnet sein. Dazu kann, wie in Fig. 2 dargestellt, ein Druckbalken 9 auf dem Piezoelement 8 aufliegend in der Gleitlageranordnung 1 angeordnet sein. Der Druckbalken 8 kann über zwei Schauben 10 im Gleitlagerelement 2 befestigt sein. Mittels der beiden Schrauben 10 kann der auf dem Piezoelement 8 lastende Druck eingestellt werden.

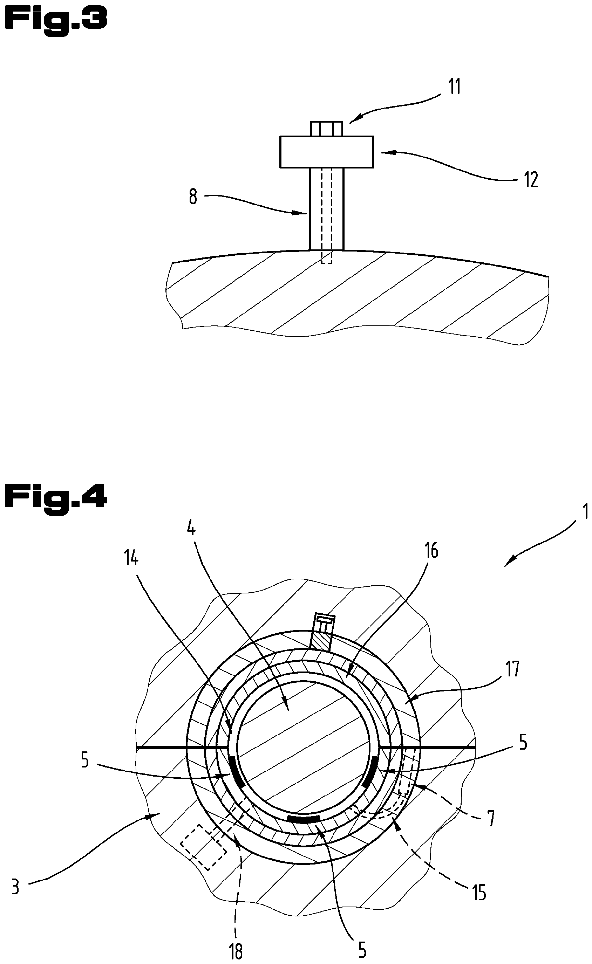

Alternativ kann vorgesehen sein, wie dies Fig. 3 zeigt, dass oberhalb des Piezoelementes 8 eine Einstellschraube 11 angeordnet ist, mit deren Verstellung eine Veränderung des auf das Piezoelement 8 einwirkenden Druckes vorgenommen werden kann. Die Einstellschraube 11 kann sich durch das Piezoelement 8 erstrecken und gegebenenfalls in das Gleitlagerelement 2 (Fig. 1) oder in die Lageraufnahme 3 (Fig. 1) eingeschraubt sein, wie dies in Fig. 4 dargestellt ist.

Prinzipiell kann das zumindest eine Piezoelement 8 auch anderes auf Druck vorgespannt werden, beispielsweise mittels eines Federelements, etc.

Bevorzugt wird das zumindest eine Piezoelement 8 durch die Vorspannung nicht verdreht, d.h. dass die beiden Stirnflächen (obere und untere Stirnfläche) des Piezoelementes 8 durch die Verspannung nicht entlang der Längsmittelachse durch das Piezoelement 8 gegeneinander verdreht werden.

Bei der beschriebenen Anordnung der Vorspannung ist das Piezoelement 8 freistehend auf bzw. in dem Gleitlagerelement 8 angeordnet, wie dies aus Fig. 2 ersichtlich ist. Es besteht jedoch auch die Möglichkeit, dass das Piezoelement 8 in einer Ausnehmung angeordnet wird, die hinsichtlich Größe und Form des Querschnitts dem des Piezoelementes 8 entspricht, sodass dieses in die Ausnehmung eingeschoben werden kann und in diese Ausnehmung auch noch seitlich gestützt bzw. geführt werden kann.

Nur der Vollständigkeit halber sein darauf hingewiesen, dass auf die Wiedergabe der Funktionsweise eines Piezoelementes 8 verzichtet wird, da diese ausführlich in der Literatur beschrieben ist und dem Fachmann auch bekannt ist.

Das zumindest eine Piezoelement 8 kann unter einem Druck vorgespannt sein, der ausgewählt ist aus einem Bereich von 5 MPa bis 50 MPa, insbesondere von 5 MPa bis 30 MPa.

Das zumindest eine Piezoelement 8 kann beispielsweis aus Blei-Zirkonat-Titanat (PZT) oder Bariumtitanat bestehen. Es sind aber auch andere piezoelektrische Werkstoffe einsetzbar.

Gemäße einer Ausführungsvariante kann vorgesehen sein, dass das Piezoelement 8 mit einer seismischen Masse 12 verbunden ist. In diesem Fall kann das Piezoelement 8 eine piezoaktive Schicht 13 aufweisen, die unterhalb der seismischen Masse 12 angeordnet ist, also beispielsweise an dem Gleitlagerelement 2 anliegend angeordnet sein kann, wie dies in Fig. 2 dargestellt ist. Die seismische Masse 12 ist dementsprechend oberhalb der piezoaktiven bzw. piezoelektrischen Schicht 13 (radial weiter außerhalb als die piezoaktive Schicht 13) und mit dieser verbunden, beispielsweise verklebt, angeordnet.

Die seismische Masse 12 kann aber auch durch den Druckbalken 9 gebildet sein, sodass also das Piezoelement 8 sich über die gesamte Höhe bis zum Druckbalken 8 erstrecken kann.

Bei der Ausführungsvariante gemäß Fig. 3 kann die seismische Masse 12 durch ein Scheibenelement gebildet sein, das zwischen dem Piezoelement 8 und der Einstellschraube 11 angeordnet ist, insbesondere unmittelbar anliegend an dem Piezoelement 8 und der Einstellschraube 11.

Die seismische Masse 12 kann aus einem Werkstoff bestehen, der eine Dichte von zumindest 7 g/cm³ aufweist, beispielsweise aus einem Stahl, aus Wolfram, aus Blei, aus Nickel, aus Gold, aus Platin, etc..

Wenn das Piezoelement 8 selbst eine relativ hohe Masse hat (bedingt durch die Werkstoffwahl), dann kann es von Vorteil sein, wenn dieses ohne seismische Masse 12 ausgeführt wird.

Die Energieerzeugungseinrichtung 7 ist der Sensor 5 selbst.

Dazu ist der Sensor 5, der in diesem Fall ein Drucksensor ist, vorzugsweise ein Indiziersensor bzw. Zylinderdruckindiziersensor, mit einem Schmierspalt 14 der Gleitlageranordnung 1 über eine Leitung 15 hydrostatisch verbunden. Über diese Leitung 15 wird der Sensor 5 mit dem Schmierspaltdruck beaufschlagt, sodass also damit der Druck des Schmiermittels im Schmierspalt gemessen werden kann.

Die Leitung 15 kann relativ klein dimensioniert werden. Beispielsweise kann die Leitung einen Durchmesser zwischen 0,5 mm bis 2 mm aufweisen.

Nachdem der Sensor 5 ein piezoaktives bzw. piezoelektrisches Element ist, kann mit dem Sensor 5 auch elektrische Energie erzeugt werden, gegebenenfalls nicht nur durch zeitlich- und/oder richtungsveränderliche Beschleunigungen relativ zum Sensor 5 sondern gegebenenfalls auch aufgrund von Druckwechselbeaufschlagungen.

Der Sensor 5 kann für die Beaufschlagung mit Drücken bis zu 10.000 bar ausgelegt sein.

Alternativ oder zusätzlich zur Verbindung des Sensors 5 mit der Leitung 15 zum Schmierspalt 14 kann nach einer weiteren Ausführungsvariante der Gleitlageranordnung 1 vorgesehen sein, dass der Sensor 5 im Schmierspalt 14 der Gleitlageranordnung 1 angeordnet wird, beispielsweise als Teil der Gleitschicht des Gleitlagerelementes 2. Auch damit ist wie bei der voranstehend genannten Ausführungsvariante der Gleitlageranordnung mit der Leitung 15 zum Schmierspalt 14 das Piezoelement 8 mit dem Schmiermitteldruck im Schmierspalt 14 der Gleitlageranordnung 1 beaufschlagbar.

Durch die Beaufschlagung des Sensors 5 mit dem Schmiermitteldruck kann der Sensor 5 neben der reinen Messung eines Parameters der Gleitlageranordnung auch zur Gewinnung von elektrischer Energie genutzt werden.

Nach einer anderen Ausführungsvariante der Gleitlageranordnung 1, die Ausschnittsweise in Fig. 4 dargestellt ist, kann vorgesehen sein, dass der Sensor 5 in eine radial innerste Schicht des Gleitlagerelementes 2 eingebettet ist. Das Gleitlagerelement 2 kann nämlich als sogenanntes Mehrschichtgleitlager ausgebildet sein und zumindest eine Gleitschicht 16 und eine Stützschicht 17 aufweisen. Zwischen diesen können weitere Schichten, wie beispielsweise eine Lagermetallschicht und/oder eine Bindeschicht und/oder eine Diffusionssperrschicht, etc. angeordnet sein. Die Gleitschicht 16 ist dabei bekanntlich jene Schicht, auf der die Welle 4 im Betrieb abgleitet. Die Gleitschicht 16 kann beispielsweise aus einem keramischen Werkstoff oder aus einem Gleitlack bestehen. Alternativ dazu kann aber auch vorgesehen sein, dass der Sensor 5 in einer unterhalb der Gleitschicht 16 angeordneten Schicht angeordnet ist und von der Gleitschicht 16 über eine elektrisch isolierende Schicht, beispielsweise eine keramische Schicht, z.B. aus Al2O3, getrennt ist. In diesem Fall kann die Gleitschicht 16 auch aus einem bekannten, metallischen Werkstoff, beispielsweise einer Zinnbasislegierung, bestehen.

Es sei darauf hingewiesen, dass im Falle einer Direktbeschichtung, wie diese voranstehend erwähnt wurde, die Stützschicht 17 durch das jeweilige direktbeschichtete Bauteil gebildet ist. Wie aus Fig. 4 zu ersehen ist, können auch mehrere Sensoren 5 in der Gleitlageranordnung 1 an unterschiedlichen Stellen angeordnet werden, sodass die Betriebsparameter unterschiedlich belasteter Stellen in der Gleitlageranordnung 1 erfasst werden können.

Weiter ist aus Fig. 4 zu ersehen, dass der voranstehend als Energieerzeugungseinrichtung 7 eingesetzte Sensor 5 mit weiteren Sensoren 5 in der Gleitlageranordnung 1 kombiniert werden kann.

Zudem zeigt Fig. 4, dass es auch möglich ist, den Sensor 5, insbesondere die Energieerzeugungseinrichtung 7, in der Lageraufnahme 3 zu platzieren und über eine Leitung 18 hydrostatisch mit dem Schmierspalt 14 zu verbinden.

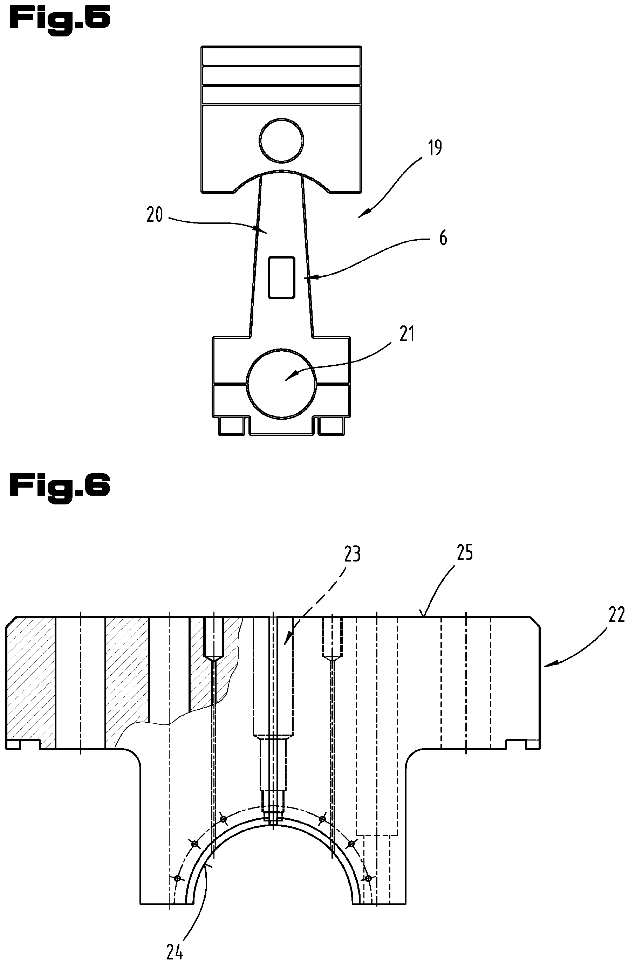

Gemäß einer bevorzugten Ausführungsvariante ist die Gleitlageranordnung 1 bzw. die Lagerstruktur eine Pleuelstange 19 mit einem Pleuelschaft 20. Die Datenübertragungseinrichtung 6 ist am oder zumindest teilweise im Pleuelschaft 20 angeordnet, wie dies in Fig. 5 gezeigt ist. Die voranstehenden Ausführungen betreffend die Erzeugung der elektrischen Energie und die Anordnung des zumindest einen Sensors 5 sind insbesondere auf das große Pleuelauge anwendbar, sodass also Betriebsparameter von der Gleitlagerung im großen Pleuelauge 21 an die Datenübertragungseinrichtung 6 geliefert werden und von dort drahtlos weitergleitet werden.

Wie in Fig. 6 gezeigt, besteht gemäß einer Ausführungsvariante die Möglichkeit, dass der Sensor 5, insbesondere der Indiziersensor, in einen Lagerdeckel 22 einer geteilten Lageranordnung, die auch noch das Gegenstück zum Lagerdeckel 22, wie beispielsweise einen Lagerstuhl oder einen Pleuelschaft, umfassen kann (nicht dargestellt), integriert werden. Dazu kann eine radial nach außen sich erstreckende Bohrung 23 vorgesehen sein, die gegebenenfalls gestuft ausgeführt sein kann, wie dies in Fig. 6 dargestellt ist. Die Bohrung 23 erstreckt sich durchgehend von einer inneren Gleitfläche bzw. Gleitlagerelement-Aufnahmefläche 24 bis in eine äußere Oberfläche 25 des Lagerdeckels 22. Für den Fall, dass in dem Lagerdeckel 22 ein Gleitlagerelement 2 drehfest verbunden mit dem Lagerdeckel 22 angeordnet ist, kann auch in diesem Gleitlagerelement 2 eine entsprechende Bohrung in Verlängerung der Bohrung 23 durch den Lagerdeckel 22 angeordnet sein.

Durch diese Bohrung 22 (und gegebenenfalls die Bohrung im Gleitlagerelement 2) ist es möglich, den in der Bohrung 22 angeordneten Sensor 5 mit dem Schmierspaltdruck zu beaufschlagen, um diesen zu messen und/oder elektrische Energie zu erzeugen.

Gegebenenfalls ist es bei allen Ausführungsvariante der Erfindung möglich, dass in der Gleitlageranordnung 1 auch zumindest ein Energiespeicherelement angeordnet ist, dass gegebenenfalls mit elektrischer Energie vom piezoelektrisch ausgeführten Sensor 5 gespeist wird.

Es ist mit der Gleitlageranordnung 1 möglich, ein Gleitlagerelement 2 in einer Gleitlageraufnahme (Lageraufnahme 3) einer Gleitlageranordnung 1 mit zumindest einem Sensor 5 zu überwachen, wobei mit dem Sensor 5 ein Messwert erfasst wird und dieser Messwert an die Datenübertragungseinrichtung 6 zur, insbesondere drahtlosen, Datenübertragung an einen Empfänger der Daten weitergeleitet wird, und wobei die elektrische Energie für den Sensor 5 und/oder die Datenübertragungseinrichtung 6 durch die Bewegung des Gleitlagerelementes 2 oder der Gleitlageranordnung 1 im Betrieb erzeugt wird. Für die Erzeugung der elektrischen Energie wird zumindest ein Piezoelement 8 verwendet, das auf Druck vorgespannt wird, und das der Sensor 5 ist.

Der Sensor 5 kann im Schmierspalt 14 der Gleitlageranordnung 1 angeordnet werden oder mit dem Schmierspalt 14 hydrostatisch verbunden werden, sodass mit dem Sensor 5 der Druck im Schmierspalt 14 gemessen werden kann, wobei durch den Einfluss des Druckes auf den Sensor elektrische Energie erzeugt werden kann. Zusätzlich dazu kann durch die Bewegung des Sensors 5 elektrische Energie erzeugt werden.

Es wird ein als Piezoelement 8 ausgebildeten Sensor 5 zur Erzeugung von elektrischer Energie mit Hilfe des Schmiermitteldrucks im Schmierspalt 14 für die Überwachung eines Gleitlagerelementes 2 während des Betriebes des Gleitlagerelementes 2 verwendet.

Generell kann die Erfindung, insbesondere die Gleitlageranordnung 1, in bzw. an Maschinenteilen mit zeitlich- und/oder richtungsveränderlichen Beschleunigungen relativ zum Piezoelement 8 bzw. zum Sensor 5 angewandt werden, insbesondere zur Erzeugung von elektrischer Energie.

Der Sensor 5 kann für Drücke bis 10.000 bar im Schmierspalt 14 eingesetzt werden.

Mit dem Sensor 5 können Leistungen zwischen 1 mW und 1 W und mehr erbracht werden.

Von Vorteil ist weiter, dass der benötigte Bauraum für den Sensor 5 relativ klein ist, beispielsweise zwischen 1 cm³ und 15 cm³ betragen kann.

Die Gleitlageranordnung 1 kann insbesondere in einem Temperaturbereich bis 200°C eingesetzt werden.

Die Ausführungsbeispiele zeigen mögliche Ausführungsvarianten der Gleitlageranordnung 1, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus die Gleitlageranordnung 1 bzw. deren Bestandteile nicht zwingenderweise maßstäblich dargestellt sind.

### Bezugszeichenaufstellung

- 1: Gleitlageranordnung
- 2: Gleitlagerelement
- 3: Lageraufnahme
- 4: Welle
- 5: Sensor
- 6: Datenübertragungseinrichtung
- 7: Energieerzeugungseinrichtung
- 8: Piezoelement
- 9: Druckbalken
- 10: Schraube
- 11: Einstellschraube
- 12: Masse
- 13: Schicht
- 14: Schmierspalt
- 15: Leitung
- 16: Gleitschicht
- 17: Stützschicht
- 18: Leitung
- 19: Pleuelstange
- 20: Pleuelschaft
- 21: Pleuelauge
- 22: Lagerdeckel
- 23: Bohrung
- 24: Gleitlagerelement-Aufnahmefläche
- 25: Oberfläche

## Patentansprüche

1. Gleitlageranordnung (1) umfassend zumindest ein Gleitlagerelement (2), das in einer Lageraufnahme (3) angeordnet ist, wobei die Lageraufnahme (3) Teil einer Lagerstruktur ist, und wobei die Lagerstruktur zumindest einen Sensor (5) aufweist, der mit einer Datenübertragungseinrichtung (6) zur, insbesondere drahtlosen, Datenübertragung an einen Empfänger der Daten verbunden ist, und mit einer Energieerzeugungseinrichtung (7) zur autarken Versorgung des Sensors (5) und/oder der Datenübertragungseinrichtung (6) mit elektrischer Energie, wobei die Energieerzeugungseinrichtung (7) zumindest ein Piezoelement (8) aufweist, und die Energieerzeugungseinrichtung (7) der Sensor (5) ist, **dadurch gekennzeichnet, dass** das Piezoelement (8) mit dem Schmiermitteldruck im Schmierspalt (14) zwischen dem Gleitlagerelement (2) und einer Welle (4) oder der Lageraufnahme (3) beaufschlagbar ist, wofür der Sensor (5) im Schmierspalt (14) der Gleitlageranordnung (1) als Teil einer Gleitschicht (16) des Gleitlagerelementes (2) angeordnet ist oder mit dem Schmierspalt (14) hydrostatisch verbunden ist .

2. Gleitlageranordnung (1) nach Anspruch 1, **dadurch gekennzeichnet, dass** das Piezoelement (8) mit einer seismischen Masse (12) verbunden ist.

3. Gleitlageranordnung (1) nach Anspruch 1 oder 2, **dadurch gekennzeichnet, dass** das Piezoelement (8) auf Druck vorgespannt ist.

4. Gleitlageranordnung (1) nach einem der Ansprüche 1 bis 3, **dadurch gekennzeichnet, dass** die Lagerstruktur eine Pleuelstange (19) mit einem Pleuelschaft (20) ist, und dass die Datenübertragungseinrichtung (6) am oder zumindest teilweise im Pleuelschaft (20) angeordnet ist.

5. Verfahren zur Überwachung eines Gleitlagerelementes (2) in einer Gleitlageraufnahme einer Gleitlageranordnung (1) mit zumindest einem Sensor (5), wobei mit dem Sensor (5) ein Messwert erfasst wird und dieser Messwert an eine Datenübertragungseinrichtung (6) zur, insbesondere drahtlosen, Datenübertragung an einen Empfänger der Daten weitergeleitet wird, und wobei die elektrische Energie für den Sensor (5) und/oder die Datenübertragungseinrichtung (6) durch die Bewegung des Gleitlagerelementes (2) oder der Gleitlageranordnung (1) erzeugt wird, und für die Erzeugung der elektrischen Energie zumindest ein Piezoelement (8) verwendet wird, wobei das Piezoelement (8) als Sensor (5) ausgeführt wird, sodass die Erzeugung der elektrischen Energie mit dem Sensor (5) erfolgt, **dadurch gekennzeichnet, dass** der Sensor (5) im Schmierspalt (14) der Gleitlageranordnung (1) als Teil einer Gleitschicht (16) des Gleitlagerelementes (1) angeordnet wird oder mit dem Schmierspalt (14) hydrostatisch verbunden wird und mit dem Sensor (5) der Druck im Schmierspalt (14) gemessen wird.

6. Verfahren nach Anspruch 5, **dadurch gekennzeichnet, dass** das Piezoelement (8) auf Druck vorgespannt wird.

## Claims

1. A sliding bearing assembly (1) comprising at least one sliding bearing element (2) which is arranged in a bearing receptacle (3), wherein the bearing receptacle (3) is part of a bearing structure, and wherein the bearing structure has at least one sensor (5) which is connected to a data transmission device (6) for, in particular wireless, data transmission to a receiver of the data, and has an energy generating device (7) for supplying the sensor (5) and/or the data transmission device (6) with electrical energy in a self-sufficient manner, wherein the energy generating device (7) has at least one piezo element (8) and the energy generating device (7) is the sensor (5), **characterized in that** the piezo element (8) can be acted upon by the lubricant pressure in the lubrication gap (14) between the sliding bearing element (2) and a shaft (4) or the bearing receptacle (3), for which purpose the sensor (5) is arranged in the lubrication gap (14) of the sliding bearing assembly (1) as part of a sliding layer (16) of the sliding bearing element (2) or is hydrostatically connected to the lubrication gap (14).

2. The sliding bearing assembly (1) according to claim 1, **characterized in that** the piezo element (8) is connected to a seismic mass (12).

3. The sliding bearing assembly (1) according to claim 1 or 2, **characterized in that** the piezo element (8) is pretensioned under pressure.

4. The sliding bearing assembly (1) according to one of claims 1 to 3, **characterized in that** the bearing structure is a connecting rod (19) with a connecting rod shank (20), and that the data transmission device (6) is arranged on or at least partially in the connecting rod shank (20).

5. A method for monitoring a sliding bearing element (2) in a sliding bearing receptacle of a sliding bearing assembly (1) with at least one sensor (5), wherein a measured value is detected with the sensor (5) and this measured value is forwarded to a data transmission device (6) for, in particular wireless, data transmission to a receiver of the data, and wherein the electrical energy for the sensor (5) and/or the data transmission device (6) is generated by the movement of the sliding bearing element (2) or the sliding bearing assembly (1), and for the generation of the electrical energy at least one piezo element (8) is used, wherein the piezo element (8) is embodied as a sensor (5) so that the generation of the electrical energy takes place with the sensor (5), **characterized in that** the sensor (5) is arranged in the lubrication gap (14) of the sliding bearing assembly (1) as part of a sliding layer (16) of the sliding bearing element (1) or is hydrostatically connected to the lubrication gap (14) and the pressure in the lubrication gap (14) is measured with the sensor (5).

6. The method according to claim 5, **characterized in that** the piezo element (8) is pretensioned under pressure.

## Revendications

1. Dispositif de palier lisse (1) comprenant au moins un élément de palier lisse (2) qui est disposé dans un logement de palier (3), dans lequel le logement de palier (3) fait partie d'une structure de palier et dans lequel la structure de palier comprend au moins un capteur (5) qui est relié avec un dispositif de transmission de données (6) pour la transmission de données, plus particulièrement sans fil, à un récepteur des données, et avec un dispositif de production d'énergie (7) pour l'alimentation autonome du capteur (5) et/ou du dispositif de transmission de données (6) en énergie électrique, dans lequel le dispositif de production d'énergie (7) comprend au moins un élément piézoélectrique (8) et le dispositif de production d'énergie (7) est le capteur (5), **caractérisé en ce que** l'élément piézoélectrique (8) peut être sollicité avec la pression de lubrifiant dans l'interstice de lubrification (14) entre l'élément de palier lisse (2) et un arbre (4) ou le logement de palier (3), le capteur (5) étant, pour cela, disposé dans l'interstice de lubrification (14) du dispositif de palier lisse (1), en tant que partie d'une couche de glissement (16) de l'élément de palier lisse (2) ou relié de manière hydrostatique avec l'interstice de lubrification (14).

2. Dispositif de palier lisse (1) selon la revendication 1, **caractérisé en ce que** l'élément piézoélectrique (8) est relié avec une masse sismique (12).

3. Dispositif de palier lisse (1) selon la revendication 1 ou 2, **caractérisé en ce que** l'élément piézoélectrique (8) est précontraint en pression.

4. Dispositif de palier lisse (1) selon l'une des revendications 1 à 3, **caractérisé en ce que** la structure de palier est une bielle (19) avec un corps de bielle (20) et **en ce que** le dispositif de transmission de données (6) est disposé sur ou au moins partiellement dans le corps de bielle (20).

5. Procédé pour la surveillance d'un élément de palier lisse (2) dans un logement de palier lisse d'un dispositif de palier lisse (1) avec au moins un capteur (5), dans lequel une valeur de mesure est relevée avec le capteur (5) et cette valeur de mesure est transmise à un dispositif de transmission de données (6) pour la transmission de données, plus particulièrement sans fil, à un récepteur des données, et dans lequel l'énergie électrique pour le capteur (5) et/ou le dispositif de transmission de données (6) est générée par le mouvement de l'élément de palier lisse (2) ou du dispositif de palier lisse (1) et, pour la production de l'énergie électrique, au moins un élément piézoélectrique (8) est utilisé, dans lequel l'élément piézoélectrique (8) est conçu comme un capteur (5), de façon à ce que la production de l'énergie électrique ait lieu avec le capteur (5), **caractérisé en ce que** le capteur (5) est disposé dans l'interstice de lubrification (14) du dispositif de palier lisse (1), en tant que partie d'une couche de glissement (16) de l'élément de palier lisse (1) ou est relié de manière hydrostatique avec l'interstice de lubrification (14) et la pression dans l'interstice de lubrification (14) est mesurée avec le capteur (5).

6. Procédé selon la revendication 5, **caractérisé en ce que** l'élément piézoélectrique (8) est précontraint en pression.
